# EUROPÄISCHE PATENTSCHRIFT

(11) **EP 0 826 212 B1**
(45) Veröffentlichungstag und Bekanntmachung des Hinweises auf die Patenterteilung: **29.12.1999**
(21) Anmeldenummer: 96919544.5
(22) Anmeldetag: 10.05.1996
(51) Int. Cl.: G11B 17/22, G11B 19/10

(54) **WIEDERGABE- UND/ODER AUFZEICHNUNGSGERÄT FÜR PLATTEN**
READ AND/OR RECORD DEVICE FOR DISCS
APPAREIL DE LECTURE ET/OU D'ENREGISTREMENT POUR DISQUES

(30) Priorität: 13.05.1995 DE 19517661
(43) Veröffentlichungstag der Anmeldung: 04.03.1998
(73) Patentinhaber: NSM AKTIENGESELLSCHAFT, 55411 Bingen (DE)
(72) Erfinder: ZIMMER, Manfred, D-55452 Rümmelsheim (DE)
(74) Vertreter: Becker, Bernd, Dipl.-Ing.
(86) Internationale Anmeldenummer: DE9600855
(87) Internationale Veröffentlichungsnummer: WO9636047

(56) Entgegenhaltungen:
- EP-A- 0 277 634
- WO-A-92/13343
- DE-A- 3 922 721
- US-A- 5 191 569

## Beschreibung

Die Erfindung bezieht sich auf ein Wiedergabe- und/oder Aufzeichnungsgerät für Platten mit
- eine Gehäuse,
- mindestens einem Plattenmagazin mit einer Vielzahl übereinanderliegend in Aufnahmefächern gelagerter, jeweils eine Platte aufnehmender Plattenhalter,
- mindestens einem Laufwerk zum Auslesen oder Einschreiben von Informationen von der bzw. auf die Platte,
- einer in Stapelrichtung des Plattenmagazin verfahrbaren Transporteinrichtung zur Hin- und Herbeförderung einer gewünschten Platte mit dem zugehörigen Plattenhalter zwischen dem Plattenmagazin und dem Laufwerk, und
- einer zentralen Steuereinheit.

Ein derartiges Wiedergabe- und/oder Aufzeichnungsgerät für Platten ist aus der DE 39 22 721 A1 bekannt. Die Transporteinrichtung umfaßt einen Tragarm für die Aufnahme eines Plattenhalters mit darin abgelegter Platte. Eine Auszugeinrichtung der Transporteinrichtung befördert den Plattenhalter mit der ausgewählten Platte auf entsprechend angeordneten Tragschienen auf den Tragarm. Nach dem Erreichen der endgültigen Position des Plattenhalters auf dem Tragarm bringt die Transporteinrichtung den Plattenhalter zu dem Laufwerk. Das Inhaltsverzeichnis der auf diese Weise in das Laufwerk geladenen Platte wird nunmehr ausgelesen. Befindet sich demgegenüber keine Platte in dem Plattenhalter, dann wird der leere Plattenhalter in das Plattenmagazin zurückbefördert. Durch diesen unnötigen Transport-Lade- und Lesevorgang geht relativ viel Zeit verloren, was sich negativ auf den Bedienkomfort des Gerätes auswirkt.

Um diesen Nachteil zu beseitigen, ist bereits aus der WO 92/13343 ein Plattenabspielgerät der genannten Art bekannt, bei dem ein Sensor an dem Tragarm der Transporteinrichtung zur tatsächlichen Überprüfung des Vorhandenseins einer Platte in dem von dem Tragarm der Transporteinrichtung aufgenommenen Plattenhalter befestigt ist. Falls der Sensor keine Platte in dem Plattenhalter erkennt, wird dieser Plattenhalter sofort wieder von der Transporteinrichtung in das zugehörige Aufnahmefach des Plattenmagazins zurückbefördert. Ein derart angeordneter Sensor erfordert ein Schleppkabel zwischen dem Sensor und einer Schnittstelle zur zentralen Steuereinheit, wobei die Länge des Schleppkabels so bemessen sein muß, daß das Schleppkabel den Bewegungsablauf der Transporteinrichtung nicht beeinträchtigt. Das Schleppkabel ist insofern nachteilig, als es häufig zu Störungen des Betriebsablaufes des Gerätes führt, da es in seiner Lage nicht genau fixiert werden kann und die Gefahr des Brechens nach einer gewissen Anzahl von Bewegungszyklen besteht.

Der Erfindung liegt die Aufgabe zugrunde, ein Wiedergabe- und/oder Aufzeichnungsgerät der eingangs genannten Art zu schaffen, das den Transport eines leeren Plattenhalters zu einem Laufwerk bei gegebener hoher Betriebssicherheit ausschließt.

Diese Aufgabe wird erfindungsgemäß dadurch gelöst, daß der Transporteinrichtung eine gehäuseseitig angeordnete Erkennungseinrichtung für das Vorhandensein einer Platte in dem in die Transporteinrichtung eingezogenen Plattenhalter zugeordnet ist.

Durch diese Maßnahme ist es möglich, ohne Verwendung eines Schleppkabels frühzeitig zu erkennen, ob ein in der Transporteinrichtung befindlicher Plattenhalter mit einer Platte bestückt ist oder nicht. Stellt die Erkennungseinrichtung einen leeren Plattenhalter fest, so wird dieser unmittelbar wieder in das Plattenmagazin zurückbefördert. Ein weiterer zeitaufwendiger Transport zum Laufwerk und der anschließende Versuch, Informationen auszulesen, wird also durch die Erkennungseinrichtung unterbunden. Da die Erkennungseinrichtung stationär angeordnet ist, ergibt sich eine hohe Betriebssicherheit bei gleichzeitig gegebener Wartungsfreiheit.

Um eine störungsunempfindliche und einfach aufgebaute Erkennungseinrichtung zu erhalten, ist nach einer vorteilhaften Ausgestaltung der Erfindung die Erkennungseinrichtung als Lichtschranke ausgebildet. Bevorzugt umfaßt die Lichtschranke einen IR-Sender und einen IR-Empfänger. Das Infrarot-Licht ist in der Lage, eine klarsichtige Staubschutzscheibe für eine in der Transporteinrichtung befindliche Platte ungehindert zu durchdringen.

Nach einer vorteilhaften Weiterbildung der Erfindung ist der Sender unterhalb der Transporteinrichtung im Gehäuse und der Empfänger gegenüberliegend auf einer von der Transporteinrichtung unbeeinflußten optischen Achse oberhalb der Transporteinrichtung im Gehäuse angeordnet. Hierbei wird der Lichtstrahl der Lichtschranke nicht von den Bewegungsabläufen der Transporteinrichtung unterbrochen, und es besteht die Möglichkeit, den Erkennerunsvorgang für das Vorhandensein einer Platte in einem Plattenhalter gleich zu Anfang des Transportablaufs zu starten.

Zweckmäßigerweise wird die Lichtschranke bei Beginn des Transportes eines Plattenhalters aus dem Plattenmagazin in die Transporteinrichtung aktiviert. Bevorzugt beaufschlagt bei einem Nichtvorhandensein einer Platte in dem in die Transporteinrichtung eingezogenen Plattenhalter ein Lichtstrahl des Senders den Empfänger, und bei einem Vorhandensein einer Platte in dem in die Transporteinrichtung eingezogenen Plattenhalter trifft aufgrund der Sperrwirkung der Platte kein Lichtstrahl des Senders auf den Empfänger.

Damit eine schnelle Signalauswertung durch die an die Lichtschranke angeschlossene Steuereinheit durchgeführt werden kann, erfolgt nach einer weiteren Ausgestaltung der Erfindung nach dem Erreichen der Endlage des Plattenhalters in der Transporteinrichtung eine Abfrage des Empfängers nach einem empfangenen oder einem nichtempfangenen Signal.

Weiterhin ist bevorzugt vorgesehen, daß nach dem Erkennen des Vorhandenseins einer Platte in dem Plattenhalter vom Empfänger ein Signal zum Weitertransport durch die Transporteinrichtung zu dem Laufwerk abgegeben wird. Zweckmäßigerweise wird nach dem Erkennen des Nichtvorhandenseins einer Platte in dem Plattenhalter vom Empfänger ein Signal zum sofortigen Rücktransport des Plattenhalters aus der Transporteinrichtung in das Plattenmagazin gegeben. So ergibt sich insgesamt ein zuverlässiger, schneller Betriebsablauf.

Bei einer alternativen Ausführung der Erfindung ist die Erkennungseinrichtung als Ultraschallanlage ausgebildet. In diesem Falle sind lediglich der Sender und der Empfänger der Lichtschranke entsprechend auszutauschen, wobei die Betriebsabläufe die gleichen sind.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

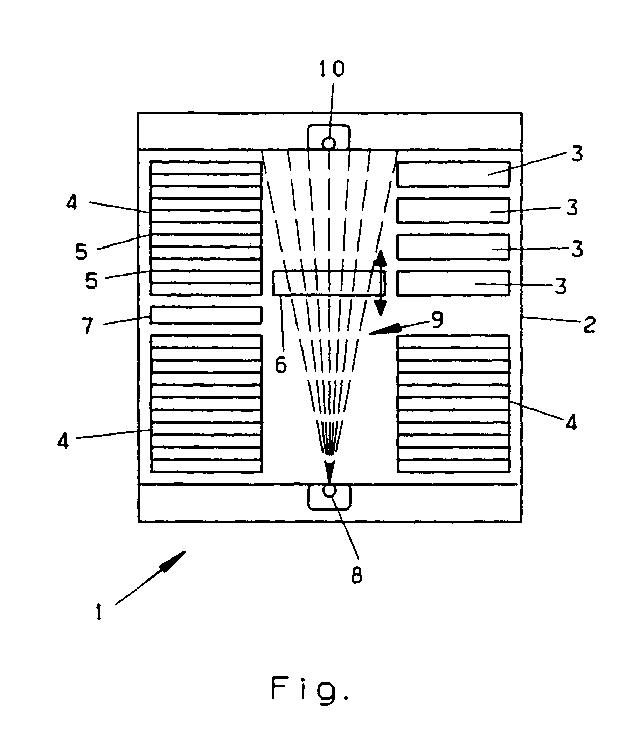

Der der Erfindung zugrundeliegende Gedanke wird in der nachfolgenden Beschreibung anhand eines Ausführungsbeispieles, das in der Zeichnung dargestellt ist, näher erläutert. Die einzige Figur der Zeichnung zeigt eine schematische Vorderansicht eines Wiedergabe- und/oder Aufzeichnungsgerätes nach der Erfindung.

Das Wiedergabe- und/oder Aufzeichnungsgerät 1, durch das sowohl auf Platten gespeicherte Informationen, insbesondere Musikdarbietungen, optisch ausgelesen und wiedergegeben als auch Informationen auf Platten eingeschrieben werden können, besitzt ein Gehäuse 2 mit einer nicht dargestellten Bedienungstafel, die verschiedene, mit einer zentralen Steuereinheit verbundenen Tasten aufweist, beispielsweise eine Plattenauswahltaste, eine Plattenabspieltaste und eine Stopptaste. In der rechten oberen Hälfte des Gehäuses 2 befinden sich vier übereinander angeordnete Laufwerke 3 zum Auslesen oder Einschreiben von Informationen auf eine bzw. von einer Platte. Jedes Laufwerk 3 ist in nicht dargestellten Führungen schubladenförmig gelagert und damit auswechselbar. Dem Turm der Laufwerke 3 steht auf der anderen Seite des Gehäuses 2 ein Plattenmagazin 4 gegenüber, das eine Vielzahl übereinanderliegend angeordneter Aufnahmefächer für die Lagerung einer entsprechenden Anzahl an je eine Platte aufnehmender Plattenhalter 5 besitzt. Sowohl unterhalb des Plattenmagazins 4 als auch unterhalb des Turms der Laufwerke 3 ist jeweils ein weiteres, identisch aufgebautes Plattenmagazin 4 angeordnet. Sämtliche Plattenmagazine 4 sind schubladenförmig auswechselbar in das Gehäuse 2 eingesetzt. In dem Raum zwischen den beiden übereinanderliegenden Plattenmagazinen 4 und dem Turm der Laufwerke 3 mit dem darunterliegenden Plattenmagazin 4 befindet sich eine auf- und abverfahrbare Transporteinrichtung 6 für einen eine Platte aufnehmenden Plattenhalter 5.

Mittels der Transporteinrichtung 6 sind die Plattenhalter wahlweise zwischen beliebigen Aufnahmefächern und einem beliebigen Laufwerk 3 transportierbar.

Zwischen den beiden übereinanderliegenden Plattenmagazinen 4 befindet sich ein einen Plattenhalter 5 mit einer Platte aufnehmendes Lade-Schubfach 7. Das Lade-Schubfach 7 nimmt einen mit einer Platte bestückten Plattenhalter 5 auf, der im eingeschobenen Zustand des Lade-Schubfaches von der Transporteinrichtung 6 erfaßt werden kann. Im herausgezogenen Zustand des Ladeschubfaches 7 kann eine Platte leicht von Hand ausgewechselt werden.

Unterhalb der Transporteinrichtung 6 ist im Gehäuse 2 ein IR-Sender 8 einer Lichtschranke 9 angeordnet. Auf einer von der Transporteinrichtung 6 unbeeinflußten optischen Achse liegt dem IR-Sender 8 ein im Gehäuse 2 angebrachter IR-Empfänger 10 gegenüber. Ein in einem der Plattenmagazine 4 gelagerter Plattenhalter 5 mit der gewünschten Platte wird mittels einer nicht dargestellten Auszugeinrichtung der Transporteinrichtung 6 erfaßt und horizontal in diese eingezogen. Zu diesem Zeitpunkt ist die Lichtschranke 9 aktiviert, d.h. der IR-Sender 8 strahlt IR-Licht aus und der IR-Empfänger 10 ist in Bereitschaft. Ist der Transportvorgang der horizontalen Auszugseinrichtung beendet, fragt die zentrale Steuereinheit den IR-Empfänger 10 nach einem empfangenen oder nichtempfangenen Lichtsignal ab. Ist tatsächlich eine Platte in dem in die Transporteinrichtung 6 eingezogenen Plattenhalter 5 vorhanden, so trifft aufgrund der Sperrwirkung der Platte kein Lichtstrahl auf den IR-Empfänger 10. Die zentrale Steuereinheit registriert das nichtempfangene Lichtsignal und leitet den Weitertransport des Plattenhalters 5 mit der Platte durch die Transporteinrichtung 6 zu einem der Laufwerke 3 ein. Nach dem Ladevorgang der Platte in das Laufwerk können die auf der Platte abgelegten Informationen ausgelesen werden.

Befindet sich demgegenüber keine Platte in dem in die Transporteinrichtung 6 eingezogenen Plattenhalter 5, dann wird der IR-Empfänger 10 der Lichtschranke 9 mit einem Lichtstrahl des IR-Senders 8 beaufschlagt. Dieses von dem IR-Empfänger 10 empfangene Signal wird von der zentralen Steuereinheit registriert, die daraufhin den sofortigen horizontalen Rücktransport des leeren Plattenhalters 5 von der Transporteinrichtung 6 in das zugehörige Aufnahmefach des entsprechenden Plattenmagazins 4 veranlaßt. Anschließend kann sofort eine erneute Auswahl einer Platte erfolgen.

## Patentansprüche

1. Wiedergabe- und/oder Aufzeichnungsgerät für Platten mit
- mindestens einem Plattenmagazin mit einer Vielzahl übereinanderliegend in Aufnahmefächern gelagerter, jeweils eine Platte aufnehmender Plattenhalter,
- mindestens einem Laufwerk zum Auslesen oder einschreiben von Informationen von der bzw. auf die Platte,
- einer in Stapelrichtung des Plattenmagazins verfahrbaren Transporteinrichtung zur Hin- und Herbeförderung einer gewünschten Platte mit dem zugehörigen Plattenhalter zwischen dem Plattenmagazin und dem Laufwerk, und
- einer zentralen Steuereinheit,
dadurch gekennzeichnet, daß der Transporteinrichtung (6) eine gehäuseseitig angeordnete Erkennungseinrichtung für das Vorhandensein einer Platte in dem in die Transporteinrichtung (6) eingezogenen Plattenhalter (5) zugeordnet ist.

2. Wiedergabe- und/oder Aufzeichnungsgerät für Platten nach Anspruch 1, dadurch gekennzeichnet, daß die Erkennungseinrichtung als Lichtschranke (9) ausgebildet ist.

3. Wiedergabe- und/oder Aufzeichnungsgerät für Platten nach den Ansprüchen 1 und 2, dadurch gekennzeichnet, daß die Lichtschranke (9) einen IR-Sender (8) und einen IR-Empfänger (10) umfaßt.

4. Wiedergabe- und/oder Aufzeichnungsgerät für Platten nach Anspruch 2 oder 3, dadurch gekennzeichnet, daß der Sender (8) unterhalb der Transporteinrichtung (6) im Gehäuse (2) und der Empfänger (10) gegenüberliegend auf einer von der Transporteinrichtung (6) unbeeinflußten optischen Achse oberhalb der Transpcrt-einrichtung (6) im Gehäuse (2) angeordnet ist.

5. Wiedergabe- und/oder Aufzeichnungsgerät für Platten nach einem der Ansprüche 2 bis 4, dadurch gekennzeichnet, daß die Lichtschranke (9) bei Beginn des Transportes eines Plattenhalters (5) aus dem Plattenmagazin (4) in die Transporteinrichtung (6) aktiviert wird.

6. Wiedergabe- und/oder Aufzeichnungsgerät für Platten nach einem der Ansprüche 2 bis 5, dadurch gekennzeichnet, daß bei einem Nichtvorhandensein einer Platte in dem in die Transporteinrichtung (6) eingezogenen Plattenhalter (5) ein Lichtstrahl des Senders (8) den Empfänger (10) beaufschlagt, und bei einem Vorhandensein einer Platte in dem in die Transporteinrichtung (6) eingezogenen Plattenhalter (5) aufgrund der Sperrwirkung der Platte kein Lichtstrahl des Senders (8) auf den Empfänger (10) trifft.

7. Wiedergabe- und/oder Aufzeichnungsgerät für Platten nach einem der Ansprüche 2 bis 6, dadurch gekennzeichnet, daß nach dem Erreichen der Endlage des Plattenhalters (5) in der Transporteinrichtung (6) eine Abfrage des Empfängers (10) nach einem empfangenen oder einem nichtempfangenen Signal erfolgt.

8. Wiedergabe- und/oder Aufzeichnungsgerät für Platten nach einem der Ansprüche 2 bis 7, dadurch gekennzeichnet, daß nach dem Erkennen des Vorhandenseins einer Platte in dem Plattenhalter (5) vom Empfänger (10) ein Signal zum Weitertransport durch die Transporteinrichtung (6) zu dem Laufwerk abgegeben wird.

9. Wiedergabe- und/oder Aufzeichnungsgerät für Platten nach einem der Ansprüche 2 bis 8, dadurch gekennzeichnet, daß nach dem Erkennen des Nichtvorhandeseins einer Platte in dem Plattenhalter (5) vom Empfänger (10) ein Signal zum sofortigen Rücktransport des Plattenhalters (5) aus der Transporteinrichtung (6) in das Plattenmagazin (4) abgegeben wird.

10. Wiedergabe- und/oder Aufzeichnungsgerät nach einem der Ansprüche 1 bis 9, dadurch gekennzeichnet, daß die Erkennungseinrichtung als Ultraschallanlage ausgebildet ist.

## Claims

1. Playback and/or recording apparatus for discs, including
- at least one disc magazine having a plurality of disc holders, which are mounted in accommodation compartments one above the other and each accommodate one disc,
- at least one drive assembly for selecting data from the disc or for entering data on the disc,
- a conveyor, which is displaceable in the stacking direction of the disc magazine, for the transport and return of a desired disc with the associated disc holder between the disc magazine and the drive assembly, and
- a central control unit,
characterised in that the conveyor (6) has associated therewith a detector which is disposed on the housing side for detecting the presence of a disc in the disc holder (5) introduced into the conveyor (6).

2. Playback and/or recording apparatus for discs according to claim 1, characterised in that the detector is a light barrier (9).

3. Playback and/or recording apparatus for discs according to claims 1 and 2, characterised in that the light barrier (9) includes an IR transmitter (8) and an IR receiver (10).

4. Playback and/or recording apparatus for discs according to claim 2 or 3, characterised in that the transmitter (8) is disposed beneath the conveyor (6) in the housing (2), and the receiver (10) is oppositely disposed above the conveyor (6) in the housing (2) on an optical axis unaffected by the conveyor (6).

5. Playback and/or recording apparatus for discs according to one of claims 2 to 4, characterised in that the light barrier (9) is activated at the beginning of the operation to introduce a disc holder (5) from the disc magazine (4) into the conveyor (6).

6. Playback and/or recording apparatus for discs according to one of claims 2 to 5, characterised in that, if there is no disc in the disc holder (5) introduced into the conveyor (6), a light beam from the transmitter (8) acts on the receiver (10) and, if there is a disc in the disc holder (5) introduced into the conveyor (6), no light beam from the emitter (8) encounters the receiver (10) because of the blocking effect of the disc.

7. Playback and/or recording apparatus for discs according to one of claims 2 to 6, characterised in that, after the end position of the disc holder (5) is reached in the conveyor (6), a read-out from the receiver (10) is effected according to a received or a non-received signal.

8. Playback and/or recording apparatus for discs according to one of claims 2 to 7, characterised in that, after the receiver (10) has detected the presence of a disc in the disc holder (5), a signal is issued for the disc holder to be conveyed further by the conveyor (6) to the drive assembly.

9. Playback and/or recording apparatus for discs according to one of claims 2 to 8, characterised in that, after the receiver (10) has detected the absence of a disc in the disc holder (5), a signal is issued for the disc holder (5) to be returned immediately from the conveyor (6) into the disc magazine (4).

10. Playback and/or recording apparatus according to one of claims 1 to 9, characterised in that the detecting means is an ultrasonic system.

## Revendications

1. Appareil de lecture et/ou d'enregistrement de disques comportant
- au moins un magasin à disques avec un grand nombre de porte-disques contenant chacun un disque, montés superposés dans des cases de réception,
- au moins un lecteur pour la lecture ou l'enregistrement d'informations respectivement du disque ou sur le disque,
- un dispositif de transport déplaçable dans le sens d'empilement du magasin à disques pour le transport dans un sens et dans l'autre d'un disque souhaité avec le porte-disque correspondant, entre le magasin à disques et le lecteur, et
- une unité de commande centrale,
caractérisé en ce qu'au dispositif de transport (6) est affecté un dispositif de reconnaissance, disposé côté châssis, pour la présence d'un disque dans le porte-disque (5) tiré à l'intérieur du dispositif de transport (6).

2. Appareil de lecture et/ou d'enregistrement de disques selon la revendication 1, caractérisé en ce que le dispositif de reconnaissance est réalisé sous la forme d'un barrage photoélectrique (9).

3. Appareil de lecture et/ou d'enregistrement de disques selon les revendications 1 et 2, caractérisé en ce que le barrage photoélectrique (9) comprend un émetteur IR (8) et un récepteur IR (10).

4. Appareil de lecture et/ou d'enregistrement de disques selon la revendication 2 ou 3, caractérisé en ce que l'émetteur (8) est disposé au-dessous du dispositif de transport (6) dans le châssis (2) et le récepteur (10) en vis-à-vis sur un axe optique influencé par le dispositif de transport (6) au-dessus du dispositif de transport (6) dans le châssis (2).

5. Appareil de lecture et/ou d'enregistrement de disques selon l'une des revendications 2 à 4, caractérisé en ce que le barrage photoélectrique (9) est activé au début du transport d'un porte-disque (5) depuis le magasin à disques (4) jusque dans le dispositif de transport (6).

6. Appareil de lecture et/ou d'enregistrement de disques selon l'une des revendications 2 à 5, caractérisé en ce qu'en l'absence d'un disque dans le porte-disque (5) tiré à l'intérieur du dispositif de transport (6), un faisceau lumineux de l'émetteur (8) agit sur le récepteur (10), et en présence d'un disque dans le porte-disque (5) tiré à l'intérieur du dispositif de transport (6), aucun faisceau lumineux de l'émetteur (8) ne parvient sur le récepteur (10), en raison de l'effet de barrage du disque.

7. Appareil de lecture et/ou d'enregistrement de disques selon l'une des revendications 2 à 6, caractérisé en ce qu'après que la position de fin de course du porte-disque (5) soit atteinte dans le dispositif de transport (10), une interrogation du récepteur (10) est effectuée selon qu'un signal est reçu ou n'est pas reçu.

8. Appareil de lecture et/ou d'enregistrement de disques selon l'une des revendications 2 à 7, caractérisé en ce qu'après reconnaissance de la présence d'un disque dans le porte-disque (5), un signal pour le transport ultérieur à travers le dispositif de transport (6) vers le lecteur est délivré par le récepteur (10).

9. Appareil de lecture et/ou d'enregistrement de disques selon l'une des revendications 2 à 8, caractérisé en ce qu'après reconnaissance de la présence d'un disque dans le porte-disque (5), un signal pour le retour immédiat du porte-disque (5) depuis le dispositif de transport (10) jusque dans le magasin à disques (4) est délivré par le récepteur (10).

10. Appareil de lecture et/ou d'enregistrement selon l'une des revendications 1 à 9, caractérisé en ce que le dispositif de reconnaissance est réalisé sous la forme d'un système à ultrasons.
